(19) Europäisches Patentamt
European Patent Office
Office européen des brevets

(11) EP 0 724 663 B1

(12) **EUROPÄISCHE PATENTSCHRIFT**

(45) Veröffentlichungstag und Bekanntmachung des Hinweises auf die Patenterteilung:
**23.09.1998 Patentblatt 1998/39**

(21) Anmeldenummer: **94922859.7**

(22) Anmeldetag: **22.06.1994**

(51) Int Cl.6: **D21H 19/58**, C09D 109/10, C09D 113/02

(86) Internationale Anmeldenummer:
**PCT/EP94/02034**

(87) Internationale Veröffentlichungsnummer:
**WO 95/11342 (27.04.1995 Gazette 1995/18)**

# (54) VERWENDUNG VON MIT BESTIMMTEN BINDEMITTELMISCHUNGEN BESCHICHTETEM PAPIER FÜR DEN OFFSETDRUCK

USE OF PAPER COATED WITH SPECIFIC BINDER MIXTURES FOR OFFSET PRINTING

UTILISATION DE PAPIER ENDUITS AVEC CERTAINS MELANGES DE LIANTS POUR L'IMPRESSION OFFSET

(84) Benannte Vertragsstaaten:
**AT BE CH DE ES FR GB IT LI NL SE**

(30) Priorität: **19.10.1993 EP 93116834**

(43) Veröffentlichungstag der Anmeldung:
**07.08.1996 Patentblatt 1996/32**

(73) Patentinhaber: **BASF AKTIENGESELLSCHAFT**
**67056 Ludwigshafen (DE)**

(72) Erfinder:
- **WIRTH, Thomas**
  **D-67061 Ludwigshafen (DE)**
- **NISSLER, Harald**
  **D-67454 Hassloch (DE)**
- **STURM, Berthold**
  **D-67550 Worms (DE)**
- **LAWRENZ, Dirk**
  **D-67133 Maxdorf (DE)**
- **SCHULER, Bernhard**
  **D-68199 Mannheim (DE)**

(56) Entgegenhaltungen:
**EP-A- 0 509 878** **FR-A- 2 006 324**
**GB-A- 1 174 274** **US-A- 3 281 267**

- **CHEMICAL ABSTRACTS, vol. 110, no. 24, 12. Juni 1989, Columbus, Ohio, US; abstract no. 215051t,**
- **DATABASE WPI Section Ch, Week 8943, Derwent Publications Ltd., London, GB; Class A, AN 312514 & JP,A,1 229 894 (JAPAN SYNTHETIC RUBBER) 13. September 1989**
- **DATABASE WPI Section Ch, Week 8618, Derwent Publications Ltd., London, GB; Class A, AN 115663 & JP,A,61 055 289 (ASAHI CHEMICAL IND CO LTD) 19. März 1986**
- **CHEMICAL ABSTRACTS, vol. 98, no. 22, 30. Mai 1983, Columbus, Ohio, US; abstract no. 181425j,**
- **DATABASE WPI Section Ch, Week 9032, Derwent Publications Ltd., London, GB; Class A, AN 243088 & JP,A,2 169 800 (ASAHI CHEMICAL IND KK) 29. Juni 1990 in der Anmeldung erwähnt**
- **Handbook of Polymer Science and Technology, Vol. 2, 1989, Marcel Dekker Inc, N.Y, USA; pages 12, 13 and 57**
- **Ullmann's Encyclopedia of industrial chemistry, Vol A21, 1992, 5th ed., VCH, Weinheim, DE; page 169**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von Papieren, welche mit einer Papierstreichmasse auf Basis eines speziellen Bindemittels, enthaltend

A) Polymerisate auf Basis von Estern der Acrylsäure oder der Methacrylsäure und

B) Polymerisate auf Basis von Butadien, für den Offsetdruck.

Beim Offsetdruck auf gestrichenen Papieren tritt häufig ein für dieses Druckverfahren spezifisches Problem der Druckungleichmäßigkeit auf, welches in Fachkreisen als "Mottling" bezeichnet wird. Es gehört bis heute zu den ungelösten Problemen auf diesem Gebiet und beschäftigt in gleicher Weise Papierhersteller und Drucker. Bei diesem Phanomen handelt es sich um einen Effekt, der speziell beim Mehrfarbenoffsetdruck in den sogenannten Halbtönen vorkommt und als eine Art Wolkigkeit im Farbeindruck erscheint. Die Ungleichmaßigkeit in der Druckwiedergahe kommt ganz offensichtlich dadurch zustande, daß auf dem Papier die Druckfarbe an manchen Stellen besser, an anderen Stellen weniger gut angenommen wird.

Die Ursachen dieser ungleichmaßigen Farbannahme sind bis heute nicht eindeutig geklärt.

Gründe dafür, weshalb trotz intensiver Bemühungen bisher kein besseres Verstandnis für dieses Phanomen erarbeitet wurde, sind einerseits sicher im komplizierten Verfahren des Offsetdrucks, andererseits in dem nicht minder komplizierten Aufbau des Bedruckstoffs Papier zu suchen.

Neben der Optimierung der Eigenschaften sowohl des Papiers als auch der Druckfarbe, müssen diese Komponenten sowohl aufeinander abgestimmt als auch dem Verfahren des Offsetdrucks angepaßt sein.

Was den Blickwinkel des Papierherstellers betrifft, so haben für den Fall der gestrichenen Papiere nicht nur verfahrenstechnische Parameter beim Streichvorgang des Papiers einen großen Einfluß, sondern hier spielen auch die physikalisch-chemischen Eigenschaften der Strichkomponenten eine entscheidende Rolle. Insbesondere den in den Streichfarben verwendeten Bindemitteln kommt eine besondere Bedeutung zu.

Als Bindemittel für Papierstreichmassen finden neben Naturprodukten wie Stärke vorwiegend Polymerdispersionen auf Basis von Styrol und Butadien bzw. Styrol und Acrylestern Verwendung.

Es ist bekannt, daß bei Verwendung von Bindemitteln auf Basis von Butadien-(Co-)Polymeren wie z.B. Styrol-Butadien-Copolymeren für gestrichene Offsetpapiere im Vergleich zu Acrylat-(Co-)Polymeren wie z.B. Styrol-Acrylat-Copolymeren eine deutlich höhere Neigung zum Mottling besteht.

Es ist auch bekannt, Dispersion auf Basis von Styrol/Butadien mit Acrvlester-Dispersionen abzumischen.

Aus der EP-A-0 509 878 sind Streichmassen für Offsetdruckpapier bekannt, welche 5-25% eines unlöslichen Acrylestercopolymerisats, sowie ein unlösliches Butadiencopolymerisat enthalten. Die Tg's der Acrylatkomponenten bzw. deren Einfluß auf die Mottling-Eigenschaften des beschichteten Papiers werden nicht angesprochen. Der in den Beispielen verwendete Acrylatlatex weist eine relativ hohe Tg auf.

In der japanischen Offenlegungsschrift JP-A-2-169 800 werden Latexmischungen für die Papierbeschichtung aus Butadiencopolymeren und Acrylatcopolymeren beschrieben, die im Papierstrich eine homogene Druckfarbenannahme bewirken sollen. Die Latexmischungen enthalten Acrylatcopolymere mit einem Alkylacrylatanteil von 20 bis 50 Gew.-% und einer Mindestfilmbildetemperatur im Bereich von 35 bis 80°C.

Aus der JP-A-57-191 392 sind Polymermischungen für die Papierbeschichtung bekannt, die aus einem Butadiencopolymerisat und einem Acrylnitrilcopolymerisat, z.B. einem Copolymerisat mit Acrylaten, bestehen und dem beschichteten Papier einen hohen Druckglanz verliehen. Die Butadien-bzw. Acrylnitrilkomponenten liegen im Verhältnis 30:70 bis 80:20 vor.

Weiterhin sind aus der EP-A-099 792 wäßrige Polymerdispersionen, enthaltend eine Mischung aus Butadien/Styrolcopolymeren und Acrylsäureestern mit $C_1$-$C_8$-Alkanolen, sowie deren Verwendung in Klebstoffen bekannt.

Aus der JP-A-63-27579 aus dem Jahre 1988 sind Bindemittel für Papierstreichmassen bekannt, die Copolymerisate A) und B) der oben definierten Art enthalten. Die so beschichteten Papiere sind geeignet für das Tiefdruckverfahren. Das Tiefdruckverfahren unterscheidet sich jedoch prinzipiell vom Offesetdruckverfahren und damit verbunden unterscheiden sich auch die Anforderungen an das Papier und die Papierstreichmassen. Beim Offsetdruckverfahren liegen die druckenden und nicht druckenden Stellen der Druckform in einer Ebene. Bei der Einfarbung der Druckform wird die Unverträglichkeit zwischen Druckfarben und Wasser (Feuchtung der nichtdruckenden Stellen) genutzt. Das zu bedruckende Papier ist daher einem System Druckfarbe/Wasser ausgesetzt wie es beim Tiefdruck nicht vorkommt.

Aufgabe der vorliegenden Erfindung war es, für Papierstreichmassen geeignete Bindemittel zu finden, welche bei einem insgesamt guten Eigenschaftsprofil besonders beim Offset-Druck eine verbesserte gleichmäßige Bedruckbarkeit ermöglichen, also eine möglichst geringe Mottling-Neigung aufweisen.

Demgemäß besteht der Gegenstand der Erfindung in der Verwendung nach Anspruch 1 bzw. dem Verfahren nach Anspruch 4.

Als Mischungskomponenten für Papierstreichmassen finden die im folgenden beschriebenen Copolymerisate Verwendung:

Komponente (A) sind Polymerisate auf Basis von Estern der Acrylsäure und/oder der Methacrylsäure mit $C_4$-$C_{12}$-Alkanolen oder Gemischen solcher Ester, wobei die Polymerisate berechnete (nach Fox) Glasübergangstemperaturen Tg im Bereich von -60 bis 0°C, bevorzugt -50 bis -15°, aufweisen. Geeignete Alkanole sind vor allem Butanol oder 2-Ethylhexanol, aber auch iso-Butanol, tert.-Butanol, n-Pentanol, Isoamylalkohol, n-Hexanol, Cyclohexanol, Octanol oder Laurylalkohol.

Die Glasübergangstemperatur kann nach Fox berechnet werden (T.G. Fox, Bull. Am. Phys. Soc. (Ser. II) 1, 123 [1956]). Danach gilt für die Glasübergangstemperatur von Mischpolymerisaten in guter Näherung:

$$\frac{1}{Tg} = \frac{X^1}{Tg^1} + \frac{X^2}{Tg^2} + ..... + \frac{X^n}{Tg^n}$$

mit

| | |
|---|---|
| $X^1$, $X^2$ ... $X^n$ = | Massenbrüche der Monomeren 1, 2, ... n |
| $Tg^1$, $Tg^2$ ...$Tg^n$ = | Glasübergangstemperaturen der Monomeren 1, 2 ... n in Grad Kelvin. |

Die Tg der wesentlichen Monomeren sind bekannt und z.B. in "J. Brandrup, E.H. Immergut, Polymer Handbook, Ist Ed., J. Wiley & Sons, New York 1966" aufgeführt.

Die Mindestfilmbildetemperaturen (MFT) liegen vorzugsweise unter 0°C. Die Mindestfilmbildetemperaturen liegen normalerweise in gleicher Höhe wie die Tg, können mitunter aber wesentlich geringer sein, möglicherweise deshalb, weil Emulgatoren oder Wasser als Weichmacher dienen (vgl. Ullmanns Encyklopädie, Vol. A21, S . 169, 5. Auflage).

Die Polymerisate A) sind wasserunlöslich.

Vorteilhafterweise verwendet man Polymerisate A) aus

($a_1$) 50 bis 100 Gew.-%, bevorzugt 50 bis 99 Gew.-%, besonders bevorzugt 80 bis 99 Gew.-% der oben genannten $C_4$-$C_{12}$-Alkylester der Acrylsäure und/oder der Methacrylsäure,

($a_2$) 0 bis 50 Gew.-% eines Vinylaromaten mit bis zu 20 C-Atomen, bevorzugt 0 bis 35 Gew.-%, besonders bevorzugt 0 bis 20 Gew.-%, von Vinylaromaten wie α-Methylstyrol, p-Methylstyrol, Vinyltoluol oder insbesondere Styrol.

($a_3$) 0 bis 15 Gew.-%, bevorzugt 1 bis 5 Gew.-% an weiteren olefinisch ungesättigten Monomeren.

Bevorzugt in Betracht kommen eine oder mehrere ungesättigte Carbonsäuren und/oder deren Amide und/oder Anhydride, wie beispielsweise Acrylsäure, Acrylamid, Methacrylsäure, Methacrylamid oder Itaconsäure, Maleinsäure, Fumarsäure, Vinylsulfonsäure, Vinylphosphonsäuren oder Acrylamidopropansulfonsäure und deren wasserlösliche Salze. Der Anteil an ungesättigten Säuren liegt dabei besonders bevorzugt unter 4 Gew.-%.

Als Monomere ($a_3$) kommen weiterhin in Betracht radikalisch polymerisierbare Monomere wie Olefine, z.B. Ethylen, Vinyl- und Vinylidenhalogen wie Vinyl- und Vinylidenchlorid. Ester von Vinylalkoholen und 1 bis 18 C-Atome aufweisenden Monocarbonsäuren wie Vinylacetat, Vinylpropionat, Vinyl-n-butyrat, Vinyllaurat und Vinylstearat. Ester von α, β-monoethylenisch ungesättigten Dicarbonsäuren wie Maleinsäure, Fumarsäure und Itaconsäure, mit im allgemeinen 1 bis 12, vorzugsweise 1 bis 9 und insbesondere 1 bis 4 C-Atomen aufweisenden Alkanolen wie Maleinsäuredimethylester oder Maleinsäure-n-butylester. Genannt seien auch basische Monomere wie

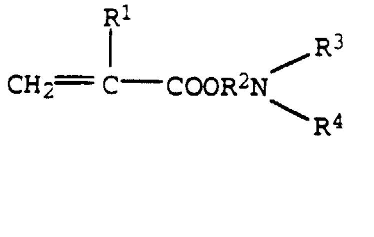

(a),

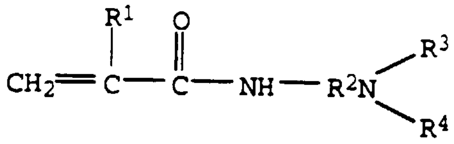

(b),

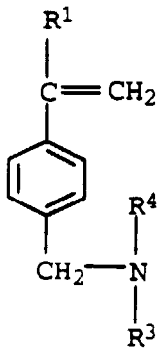

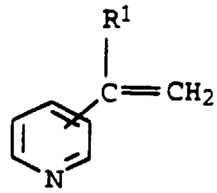

(c) und (d),

in denen

$R^1$ für H oder $CH_3$ steht,
$R^2$ für eine Alkylengruppe mit 1 bis 4 Kohlenstoffatomen und
$R^3$ und $R^4$ für H oder Alkylgruppen mit 1 bis 4 Kohlenstoffatomen stehen,

oder andere basische Zentren enthaltende radikalisch polymerisierbare Monomeren, welche auch in N-protonierter oder N-alkylierter Form vorliegen können wie z.B. die Verbindung Diallyldimethylammoniumchlorid.

Außerdem können vernetzend wirkende Monomere, in Mengen von 0 bis 10 Gew.-% in Polymerisat A) vorhanden sein als solche Monomere, die neben der radikalisch polymerisiserbaren Gruppe noch eine weitere vernetzend wirkende funktionelle Gruppe enthalten. Als derartige Monomere sind zu nennen $C_{4-8}$-konjugierte Diene wie 1,3-Butadien und Isopren, sowie radikalisch polymerisierbare Monomere mit mindestens einer Epoxy-, Hydroxy-, N-Alkylol-, N-Alkoxy-, Carbonylgruppe, Amidingruppe oder wenigstens zwei nicht konjugierten ethylenisch ungesättigten Doppelbindungen. Selbstverständlich ist auch eine Kombination derartiger Verbindungen möglich. Beispiele für epoxygruppenhaltige Monomere wären Glycidylacrylat, Glycidylmethacrylat und Vinylglycidylether.

Bevorzugte N-Alkylolverbindungen sind die N-Alkylolamide von ethylenisch ungesättigten Carbonsäuren mit 1 bis 4 C-Atome im Alkylrest wie N-Methylolacrylamid, N-Ethanolacrylamid, N-Propanolacrylamid, N-Methylolmethacrylamid, N-Ethanolmethacrylamid, N-Methylolmaleinimid, N-Methylolmaleinamid und N-Methylol-p-Vinylbenzamid.

Geeignete N-Alkoxymethylacrylate und -methacrylate sind in erster Linie Verbindungen mit 1 bis 8 C-Atomen im Alkoxyrest wie N- (Methoxymethyl)acrylamid, N- (Butoxymethyl)acrylamid, N-(Methoxymethyl)methacrylamid und N-(Butoxymethyl)methacrylamid und Methylolallylcarbamate, deren Methylolgruppen durch $C_1$-$C_8$-Alkyl verethert sein können. Als carbonylgruppenhaltige Monomere sind bevorzugt Acrolein, Diacetonacrylamid, Formylstyrol, Vinylalkylketone und (Meth)acryloxyalkylpropanale gemäß EP 00 03 516, Diacetonacrylat, Acetonylacrylat, Diaceton(meth) acrylat,2-Hydroxypropylacrylatacetylacetat und Butandiol-1,4-acrylatacetylacetat zu nennen.

Als aziridingruppenhaltiges Monomeres sei 2-(1-Aziridinyl)ethylmethacrylat genannt.

Als Vernetzungskomponenten mit mindestens zwei Acryl-, Methacryl, Alkyl- oder Vinylgruppen oder entsprechende Kombinationen sind zu nennen Alkylenglykoldi(meth)acrylate wie Ethylenglykoldiacrylat, 1,3-Butylenglykoldiacrylat, Propylenglykoldiacrylat und Triethylenglykoldimethacrylat, 1,3-Glycerindimethylacrylat, 1,1,1-Trimethylolpropandimethacrylat, 1,1,1-Trimethylolethandiacrylat, Pentaerythritoltrimethacrylat, Sorbitanpentamethacrylat, Methylenbisacrylamid und -methacrylamid, Divinylbenzol, Vinylmethacrylat, Vinylcrotonat, Vinylacrylat und Divinyladipat, 5 Diallylphthalat, Allylmethacrylat, Allylacrylat, Diallylmaleat, Diallylitakonat, Diallylmalonat, Diallylcarbonat, Triallylcitrat, Divinylether, Ethylenglykoldivinylether und Cyclopentadienylacrylat bzw. -methacrylat.

Weitere geeignete Monomere sind solche mit $SiR^1R^2R^3$-Gruppen, in denen $R^1$, $R^2$ und $R^3$ unabhängig voneinander $C_1$-$C_4$-Alkyl- oder Alkoxygruppen wie Methyl-, Ethyl-, Methoxy- und Ethoxy- bedeuten, wie beispielsweise Vinyltrialkoxysilane, Acryloxysilane wie z.B. γ-Methacryloxypropyltrimethoxysilan und Methacryloxyethyltrimethylsilan.

Zusätzlich zur Verwendung solcher vernetzender Monomere kann unter bestimmten Umständen die innere Festigkeit der Polymerfilme durch Zugabe von Metallsalzen wie z.B. Ca-, Mg-, Zn-Salze nach erfolgter Polymerisation erhöht werden, sofern sie zur Bindung mit diesen Salzen befähigte Gruppen wie beispielsweise Carboxylgruppen enthalten; darüber hinaus ist die Zugabe von Hydrazinderivaten, Aminooxyalkanen, sowie von Kondensations produkten auf der Basis Formaldehyd, Melamin, Phenol und/oder Harnstoff nach erfolgter Polymerisation möglich.

Üblicherweise enthalten die Komponenten (A) Acrylnitril oder Methacrylnitril in Mengen von weniger als 5 Gew.-%, bevorzugt weniger als 2 Gew.-%.

In einer bevorzugten Ausführungsform verwendet man Polymerisate A), die in Gegenwart einer molekulargewichtsregelnden Substanz wie beispielsweise tert.-Dodecylmercaptan, Tetrachlorkohlenstoff, Tetrabromkohlenstoff, Trichlorbrommethan, Butylmercaptan, Allylalkohol, Poly-THF-bis-thiol, Mercaptoethanol, Acetylaceton, Thioglykolsäure oder Thioglykolsaureester hergestellt wurden. Vorzugsweise werden derartige Substanzen im Gemisch mit den zu polymerisierenden Monomeren dem Reaktionsgemisch zugegeben.

Geeignete Polymerisate A) weisen in der Regel zahlenmittlere Teilchengrößen im Bereich von 50 bis 1000 nm auf, insbesondere 80 bis 500 nm, besonders bevorzugt 100 bis 300 nm. Es können auch bimodale oder multimodale Teilchengrößenverteilungen von Vorteil sein.

Geeignete Polymerisate B bestehen vorteilhafterweise aus 10 bis 100 Gew.-% Butadien, insbesondere 20 bis 80, besonders bevorzugt 20 bis 50, sowie 0 bis 90, insbesondere 20 bis 80, besonders bevorzugt 50 bis 80 Gew.-% Styrol oder den obengenannten Vinylaromaten sowie 0 bis 10 Gew.-% weiterer Comonomere wie einfach oder mehrfach ungesättigte Carbonsäuren und/oder deren Amiden und/oder deren Anhydriden, beispielsweise Acrylsäure, Methacrylsäure, Itaconsäure oder (Meth)acrylamid.

Darüber hinaus kann die Komponente (B) 0 bis 10 Gew.-% weiterer Comonomere enthalten, bevorzugt Acrylnitril und/oder Methacrylnitril und/oder Ester der (Meth)acrylsaure mit $C_1$-$C_{12}$-Alkanolen.

Zur Herstellung der Polymerisate (B) können molekulargewichtsregelnde Substanzen in Mengen von 0 bis 5 Gew.-%, bezogen auf die eingesetzte Monomerenmenge, verwendet werden. Geeignete Substanzen sind im Rahmen der Herstellung der Komponenten (A) genannt.

Die Herstellung der polymeren Komponenten A) und B) kann in üblicher Weise durch Lösungs- oder Emulsionspolymerisation unter Verwendung üblicher radikalischer Polymerisationsinitiatoren durchgeführt werden.

Das Polymer B) ist ebenfalls wasserunlöslich.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxodisulfate, Dibenzoylperoxid, γ-Butylperpivalat, t-Butylper-2-ethylhexanoat, 2,5-Dimethyl-2,5-di(t-butylperoxy)hexan, Cumolhydroperoxid, als auch um Azoverbindungen wie beispielsweise Azobisisobutyronitril, 2,2'-Azobis(2-amidinopropan)dihydrochlorid, handeln.

Geeignet sind auch kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure. Ferner eignen sich kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, wobei anstelle von Ascorbinsaure auch häufig das Natriummetallsalz der Hydroxymethansulfinsäure, Natriumsulfit, Natriumhydrogensulfit oder Natriummetabisulfit und anstelle von Wasserstoffperoxid tert.-Butylhydroperoxid oder Alkalimetallperoxodisulfate und/oder Ammoniumperoxodisulfate angewendet werden. In der Regel beträgt die Menge der eingesetzten radikalischen Initiatorsysteme, bezogen auf die Gesamtmenge der zu polymerisierenden Monomeren 0,1 bis 3 Gew.-%. Besonders bevorzugt werden Ammonium- und/oder Alkalimetallperoxodisulfate für sich oder als Bestandteil kombinierter Systeme als Initiatoren eingesetzt. Besonders bevorzugt wird Natriumperoxodisulfat verwendet.

Die Art und Weise, in der das radikalische Initiatorsystem im Verlauf der erfindungsgemäßen radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Im Falle der Emulsionspolymerisation können üblicherweise bekannte ionische und/oder nichtionische Emulgatoren und/oder Schutzkolloide bzw. Stabilisatoren verwendet werden.

Als derartige grenzflächenaktive Substanzen kommen prinzipiell die als Dispergiermittel üblicherweise eingesetzten Schutzkolloide und Emulgatoren in Betracht. Eine ausführliche Beschreibung geeigneter Schutzkolloide findet sich in Houben-Weyl, Methoden der organischen Chemie, Band XIV/1, Makromolekulare Stoffe, Georg-Thieme-Verlag,

Stuttgart, 1961, S. 411 bis 420. Als begleitende Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren relative Molekulargewichte im Unterschied zu den Schutzkolloiden üblicherweise unter 2000 liegen. Selbstverständliche müssen im Falle der Verwendung von Gemischen grenzflächeaktiver Substanzen die Einzelkomponenten miteinander verträglich sein, was im Zweifelsfall an Hand weniger Vorversuche überprüft werden kann. Vorzugsweise werden anionische und nichtionische Emulgatoren als begleitende grenzflächenaktive Substanzen verwendet. Gebräuchliche begleitende Emulgatoren sind z.B. ethoxylierte Fettalkohole (EO-Grad: 3 bis 50, Alkylrest; $C_8$ bis $C_{36}$), ethoxylierte Mono-, Di- und Tri-Alkylphenole (EO-Grad: 3 bis 50, Alkylrest: $C_4$ bis $C_9$), Alkalimetallsalze von Dialkylestern der Sulfobernsteinsäure sowie Alkali- und Ammoniumsalze von Alkylsulfaten (Alkylrest: $C_8$ bis $C_{12}$), von ethoxylierten Alkanolen (EO-Grad: 4 bis 30, Alkylrest: $C_{12}$ bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$).

Weitere geeignete Dispergiermittel sind Verbindungen der allgemeinen Formel II

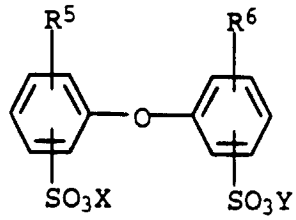

(II)

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Weitere geeignete Emulgatoren finden sich in Houben-Weyl, Methoden der organischen Chemie, Band XIV/1, Makromolekulare Stoffe, Georg Thieme Verlag, Stuttgart, 1961, Seiten 192 bis 208.

Die Dispersionen können auch unter Verwendung eines Schutzkolloids zusätzlich zu vorhandenem Emulgator oder unter Verzicht auf Emulgator, hergestellt werden, wobei die Menge des Schutzkolloids bis zu 100 Gew.-%, bevorzugt 0,5 bis 30 Gew.-%, bezogen auf die Menge der eingesetzten Monomere betragen kann.

Verfahrenstechnisch kann dieses Schutzkolloid vollständig oder zum Teil, zeitgleich oder zeitversetzt, mit den Monomeren gemeinsam oder getrennt, zugegeben werden; dabei kann es von Vorteil sein, bis zu 30 Gew.-%, vorzugsweise bis zu 10 Gew.-%, bezogen auf Monomere, Schutzkolloid in wäßriger Lösung vorzulegen.

Als natürliche Schutzkolloide seien Starke, Kasein, Gelatine und Alginate, als modifizierte Naturprodukte Hydroxyethylcellulose, Methylcellulose und Carboxymethylcellulose sowie kationisch modifizierte Stärke erwähnt. Geeignete synthetische Schutzkolloide schließen Polyacrylsäure und deren Salze, Polyacrylamide, wasserlösliche Acrylsäurecopolymere, wasserlösliche Acrylamidcopolymere, Polyvinylpyrrolidone, Polyvinylalkohole und teilverseifte Polyvinylalkohole ein.

Hierbei kann es von Vorteil sein, wenn ein Teil des Schutzkolloids auf das Polymer aufgepfropft wird.

Die Emulsionspolymerisation erfolgt in der Regel bei 30 bis 95, vorzugsweise 75 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Selbstverständlich kann die radikalische wäßrige Emulsionspolymerisation auch unter erhöhtem oder reduziertem Druck erfolgen.

Die wäßrigen Polymerisationsdispersionen werden in der Regel mit Gesamtfeststoffgehalten von 15 bis 65 Gew.-%, bevorzugt von 40 bis 60 Gew.-% hergestellt.

Die Latices können übliche Hilfsstoffe wie Ätzkali, Ammoniak oder Ethanolamin als Neutralisationsmittel, Siliconverbindungen als Entschäumer, Biozide sowie Siliconöle oder Wachse zur Absenkung der Klebrigkeit enthalten.

Die Bindemittelmischungen enthalten die Komponente A) in Mengen von 1 bis 19 Gew.-%, bezogen auf die Summe A) + B) der Feststoffgehalte, bevorzugt 5 bis 15 Gew.-%. Die Komponente B) ist in Mengen von 81 bis 99 Gew.-%, bezogen auf die Summe A) + B), bevorzugt 85 bis 95 Gew.-% enthalten, wobei sich die Mengen an A) und B) zu Hundert addieren.

Die Verwendung der Mischungskomponenten A) und B) in den für Papierstreichmassen geeigneten Bindemittelmischungen erfolgt vorzugsweise in Form wäßriger Dispersionen.

Die wäßrigen Dispersionen dieser Bindemittelmischungen weisen Feststoffgehalte im Bereich von 15 bis 65 Gew.-%, bevorzugt 40 bis 60 Gew.-% auf. Die Herstellung der wäßrigen Dispersionen der Bindemittelgemische erfolgt vorzugsweise durch Mischen der Dispersionen der Einzelkomponenten unter Rühren bei Raumtemperatur.

Die verwendeten Papierstreichmassen enthalten die beanspruchten Bindemittelmischungen in Mengen von 1 bis 20, bevorzugt 5 bis 15 Gew.-%, bezogen auf den Pigmentgehalt der Papierstreichmassen.

Üblicherweise stellen Pigmente die Hauptkomponente der Papierstreichmassen dar. Häufig verwendete Pigmente sind beispielsweise Bariumsulfat, Calciumcarbonat, Calciumsulfoaluminat, Kaolin, Talkum, Titandioxid, Zinkoxid, Kreide oder Streichclay.

Weiterhin können die Papierstreichmassen übliche Dispergiermittel enthalten. Geeignete Dispergiermittel sind Polyanionen, beispielsweise von Polyphosphorsäuren oder von Polyacrylsäuren (Polysalze), welche üblicherweise in Mengen von 0,1 bis 3 Gew.-%, bezogen auf die Pigmentmenge, enthalten sind.

Außerdem können die Papierstreichmassen sogenannte "Co-Binder" enthalten. Als natürliche Cobinder seien Stärke, Kasein, Gelatine und Alginate, als modifizierte Naturprodukte Hydroxyethylcellulose, Methylcellulose und Carboxymethylcellulose sowie kationisch modifizierte Stärke erwähnt. Es können aber auch übliche synthetische Cobinder, z.B. auf Vinylacetat- oder Acrylatbasis, verwendet werden.

Diese können in Mengen von 0,1 bis 10 Gew.-%, bezogen auf die Pigmentmenge enthalten sein.

Die Papierstreichmassen können nach üblichen Verfahren wie auf die zu beschichtenden Päpiere aufgebracht werden (vgl. Ullmann's Encyklopädie der Technischen Chemie, 4. Auflage, Bd. 17, S. 603ff).

Die so beschichteten Papiere weisen beim anschließenden Bedruckprozeß im Offset-Druckverfahren, d.h. im Kontakt mit einem Druckfarbe/Wasser-System eine gute gleichmäßige Bedruckbarkeit, also sehr geringe "Mottling-Neigung" auf.

Beispiel 1

Herstellung der Mischungskomponenten Al

| Vorlage: | |
|---|---|
| 14,00 g | Natriumlaurylsulfat (10 %ig in Wasser) |
| 2,222 g | C-12-Alkyldiphenyletherdisulfat-Na-salz (45 %ig in Wasser) |
| 82,10 g | des Zulaufs 1 |
| 6,25 g | des Zulaufs 2 |
| 296,00 g | vollentionisiertes Wasser |

| Zulauf 1: | |
|---|---|
| 2,000 g | Na-pyrophosphat |
| 16,00 g | Natriumlaurylsulfat (10 %ig in Wasser) |
| 11,11 g | C-12-Alkyldiphenyletherdisulfat-Na-salz (45 %ig in Wasser) |
| 30,93 g | Acrylsäure |
| 900,00 g | n-Butylacrylat |
| 100,00 g | Styrol |
| 2,000 g | tert.-Dodecylmercaptan |
| 100,00 g | vollentionisiertes Wasser |

| Zulauf 2: | |
|---|---|
| 5,000 g | Natriumperoxodisulfat |
| 120,00 g | vollentionisiertes Wasser |

| Zulauf 3: | |
|---|---|
| 10,00 g | tert.-Butylhydroperoxid (10 %ig in Wasser) |

| Zulauf 4: | |
|---|---|
| 10,00 g | Hydroxymethylsulfinsäure-Na-salz (10 %ig in Wasser). |

Die Vorlage wurde auf 85°C aufgeheizt und 15 min anpolymerisiert. Anschließend wurde bei 85°C zunächst während einer Zeitspanne von 2 Stunden der restliche Zulauf 1 und gleichzeitig mit Zulauf 1 beginnend während einer Zeitspanne von 2,5 Stunden der restliche Zulauf 2 zugegeben. Das Reaktionsgemisch wurde anschließend noch eine Stunde bei 85°C nachgerührt, auf 25°C abgekühlt und dann mit Zulauf 3 und 4 versetzt. Man erhielt eine Dispersion mit einem Feststoffgehalt von 51,3 Gew.% und einem pH von 2,4. Teilchengröße (Malvern Autosizer): 151 nm Berechnete Glasübergangstemperatur nach Fox: -28°C, Mindestfilmbildetemperatur: < 0°C.

Die Mindestfilmbildetemperatur wurde nach DIN 53 787 (1974) bei einer Trockenfilmdicke von 20 µun bei einem Luftstrom von 1300 1/h mit einer Temperatur von 21°C gemessen.

Beispiel 2

Herstellung der Mischungskomponenten A2

| Vorlage: | |
|---|---|
| 10,50 g | Natriumlaurylsulfat (10 %ig in Wasser) |
| 1,667 g | C-12-Alkyldiphenyletherdisulfat-Na-salz (45 %ig in Wasser) |
| 61,33 g | des Zulaufs 1 |
| 5,19 g | des Zulaufs 2 |
| 220,00 g | vollentionisiertes Wasser |

| Zulauf 1: | |
|---|---|
| 1,500 g | Na-pyrophosphat |
| 12,00 g | Natriumlaurylsulfat (10 %ig in Wasser) |
| 8,333 g | C-12-Alkyldiphenyletherdisulfat-Na-salz (45 %ig in Wasser) |
| 23,20 g | Acrylsäure |
| 675,00 g | Ethylhexylacrylat |
| 75,00 g | Styrol |
| 1,500 g | tert.-Dodecylmercaptan |
| 430,00 g | vollentionisiertes Wasser |

| Zulauf 2: | |
|---|---|
| 3,750 g | Natriumperoxodisulfat |
| 100,00 g | vollentionisiertes Wasser |

| Zulauf 3: | |
|---|---|
| 7,500 g | tert.-Butylhydroperoxid (10 %ig in Wasser) |

| Zulauf 4: | |
|---|---|
| 7,500 g | Hydroxymethylsulfinsäure-Na-salz (10 %ig in Wasser). |

Die Vorlage wurde auf 85°C aufgeheizt und 15 min anpolymerisiert. Anschließend wurde bei 85°C innerhalb von 2 Stunden der restliche Zulauf 1 zugegeben, und gleichzeitig mit Zulauf 1 beginnend innerhalb von 2,5 Stunden der restliche Zulauf 2. Das Reaktionsgemisch wurde noch eine Stunde bei 85°C gerührt, danach auf 25°C abgekühlt. Danach wurden Zulauf 3 und Zulauf 4 innerhalb einer Stunde zugegeben. Die so erhaltene Dispersion wies einen Feststoffgehalt von 50,3 Gew.-% auf.
Teilchengröße: 164 nm
berechnete Glasübergangstemperatur nach Fox: -41°C, Mindestfilmbildetemperatur (MFT) < 0°C.

Beispiel 3

Herstellung der Mischungskomponenten A3

Die Herstellung erfolgte analog Beispiel 1, jedoch ohne Einsatz von tert.-Dodecylmercaptan als Regler. Man erhielt eine Dispersion mit einem Feststoffgehalt von 50,9 Gew.-%.
Teilchengröße: 164 nm
Glasübergangstemperatur: (ber.): -28°C
MFT: <0°C

Beispiel 4

Herstellung der Mischungskomponenten A4

Die Herstellung erfolgte analog Beispiel 2, jedoch ohne Einsatz von tert.-Dodecylmercaptan als Regler. Man erhielt eine Dispersion mit einem Feststoffgehalt von 50,2 Gew.-%.
Teilchengröße: 164 nm
Glasübergangstemperatur: (ber.): -41°C
MFT: <0°C

Beispiel 5

Herstellung der Butadien-Styrol-Dispersion

| | |
|---|---|
| 0,25 kg | Natriumlaurylsulfat (10 gew.-%ig in Wasser) |
| 3,88 kg | Zulauf 1 |
| 1,05 kg | Zulauf 2 |
| 19,40 kg | vollentionisiertes Wasser |

| Zulauf 1: | |
|---|---|
| 2,75 kg | Natriumlaurylsulfat (10 gew.-% in Wasser) |
| 0,50 kg | tert.-Dodecylmercaptan |
| 1,50 kg | Acrylsäure |
| 17,50 kg | Butadien |
| 31,00 kg | Styrol |
| 24,25 kg | vollentionisiertes Wasser |

| Zulauf 2: | |
|---|---|
| 0,40 kg | Natriumperoxodisulfat |
| 4,85 kg | vollentionisiertes Wasser |

Die Vorlage wurde auf 85°C erhitzt und 15 min anpolymerisiert. Anschließend wurden der restliche Zulauf 1 während 5 Stunden und gleichzeitig mit Zulauf 1 beginnend Zulauf 2 während 5,5 Stunden zugegeben.
Teilchengröße: 170 nm
Feststoffgehalt 50 Gew.-%
Tg (DSC-Messung): 17°C
pH-Wert: 2,1

Beispiel 6

Herstellung der Bindemittelmischungen

Die Herstellung der Mischungen erfolgte durch Mischung entsprechender Mengenanteile (s. nachfolgende Tabelle 1) der Butadien-Styrol-Copolymerdispersion (Beispiel 5) und einer der Mischungskomponenten A1 bis A4.

Tabelle 1

| Bindemittelmischungen | |
|---|---|
| Mischung 1 | 95 Tle. S/Bu-Disp. + 5 Tle. Komp. A1 |
| Mischung 2 | 90 Tle. S/Bu-Disp. + 10 Tle. Komp. A1 |
| Mischung 3 | 95 Tle. S/Bu-Disp. + 5 Tle. Komp. A2 |
| Mischung 4 | 90 Tle. S/Bu-Disp. + 10 Tle. Komp. A2 |
| Mischung 5 | 95 Tle. S/Bu-Disp. + 5 Tle. Komp. A3 |
| Mischung 6 | 90 Tle. S/Bu-Disp. + 10 Tle. Komp. A4 |

Die in Tabelle 1 beschriebenen Bindemittelmischungen bzw. die in Beispiel 5 beschriebene Butadien-Styrol-Dispersion (Vergleichsbeispiel) wurden als Bindemittel in einer Papierstreichmasse der nachfolgend genannten Zusammensetzung verwendet:

| | |
|---|---|
| 60 Tle. | feinteilige Kreide |
| 40 Tle. | feinteiliger Clay |
| 1 Tle. | Carboxymethylcellulose |
| 0,6 Tle. | eines Natriumsalzes einer Polyacrylsäure mit einem Molekulargewicht von 4000 (Polysalz BASF) |
| 12 Tle. | Bindemitteldispersion (Mischungen 1 bis 6 bzw. Bsp. 5) |

Feststoffgehalt: 66 Gew.-%, pH-Wert: 8,5 bis 9 (eingestellt mit NaOH).

Als Rohpapier wurde ein holzfreies Streichrohpapier mit einem Flächengewicht von 70 g/m$^2$ verwendet. Der Auftrag der Streichmasse erfolgte beidseitig mit jeweils 13 g/m$^2$ auf einer Technikumsstreichmaschine (Auftragsverfahren: Walze, Dosierverfahren: Blade) mit einer Geschwindigkeit von 1000 m/min. Die Papierbahn wurde mittels einer IR-Trockeneinheit und Lufttrocknung auf einer Papierfeuchte von 5,5 % eingestellt.
Die maximale Bahntemperatur betrug 100°C.

Die Papierbahn wurde durch einmaligen Durchlauf durch einen Superkalander geglättet. Dabei betrug der Liniendruck 250 kN/m, die Bahngeschwindigkeit 300 m/min und die Temperatur 80°C.

Das Druckbild wurde visuell begutachtet und bezüglich Mottling-Neigung benotet. Notenskala 1 bis 6, 1 = sehr gut, 6 = sehr schlecht. Parallel dazu wurden Mottle-Scan-Werte mit Hilfe eines "Tobias-Testers" ermittelt. (Die Meßmethode ist beschrieben in: Philipp E. Tobias et. al., Tappi Journal, Vol. 72, Nr. 5, Mai 1989.) Die Mottle-Scan-Werte wurden an einer Farbflache, die mit einer Farbdeckung von 90 % der maximalen Farbdeckung der Farbe Cyan auf einer 4-Farb-Offsetdruckmaschine im Bogenoffsetdruckverfahren gedruckt wurde, bestimmt.

Tabelle 2

| Bindemittel | Mottling-Neigung[1)] | Mottle-Scan-Werte |
|---|---|---|
| Mischung 1 | 2 | 171,5 |
| Mischung 2 | 1 | 168,5 |
| Mischung 3 | 2 | 172,0 |
| Mischung 4 | 1 | 170,0 |
| Mischung 5 | 2 | 173,5 |
| Mischung 6 | 2 | 172,0 |
| Vergleichsbeispiel Bu-S-Copol. | 5 | 214,0 |

[1)]1 = sehr geringes Mottling
6 = starkes Mottling

## Patentansprüche

**1.** Verwendung von Papieren, welche mit einer Papierstreichmasse auf Basis eines Bindemittels, enthaltend

A) 1 bis 19 Gew.-% von wasserunlöslichen Polymerisaten auf Basis von Estern der Acrylsäure oder der Methacrylsäure mit $C_4$-$C_{12}$-Alkanolen mit einer Glasübergangstemperatur von -60 bis 0°C und

B) 81 bis 99 Gew.-% von wasserunlöslichen Polymerisaten auf Basis von Butadien, wobei die Gewichtsangaben auf die Summe A) + B) bezogen sind, beschichtet sind, für den Offsetdruck.

**2.** Verwendung nach Anspruch 1, wobei A) ein Polymerisat ist aus

($a_1$) 50 bis 100 Gew.-% eines Esters der Acrylsäure oder der Methacrylsäure mit $C_4$-$C_{12}$-Alkanolen oder Mischungen solcher Ester,

($a_2$) 0 bis 50 Gew.-% eines Vinylaromaten,

($a_3$) 0 bis 15 Gew.-% an weiteren olefinisch ungesättigten Monomeren

**3.** Verwendung nach Anspruch 1 oder 2, wobei Komponente A ein Polymerisat ist aus

($a_1$) 80 bis 99 Gew.-% eines Esters der Acrylsäure oder der Methacrylsäure mit $C_4$-$C_{12}$-Alkanolen oder Mischungen solcher Ester,

($a_2$) 0 bis 20 Gew.-% Styrol oder eines Styrolderivats oder Mischungen davon, und

($a_3$) bis 5 Gew.-% Acrylsäure oder Methacrylsäure oder deren Mischungen.

**4.** Verfahren zum Bedrucken von Papier, dadurch gekennzeichnet, daß Rohpapier mit einer Papierstreichmasse, enthaltend ein Bindemittel gemäß Anspruch 1 beschichtet wird und das so beschichtete Papier im Offset-Druckverfahren bedruckt wird.

## Claims

**1.** Use of papers which are coated with a paper coating slip based on a binder containing

A) from 1 to 19 % by weight of water-insoluble polymers based on esters of acrylic acid or of methacrylic acid with a $C_4$-$C_{12}$-alkanol, having a glass transition temperature of from -60 to 0°C, and

B) from 81 to 99 % by weight of water-insoluble polymers based on butadiene, the stated weights being based

on the sum A) + B), for offset printing.

2. Use as claimed in claim 1, wherein A) is a polymer of

(a$_1$) from 50 to 100 % by weight of an ester of acrylic acid or of methacrylic acid with a $C_4$-$C_{12}$-alkanol or a mixture of such esters,

(a$_2$) from 0 to 50 % by weight of a vinylaromatic and

(a$_3$) from 0 to 15 % by weight of further olefinically unsaturated monomers.

3. Use as claimed in claim 1 or 2, wherein component A is a polymer of

(a$_1$) from 80 to 99 % by weight of an ester of acrylic acid or of methacrylic acid with a $C_4$-$C_{12}$-alkanol or a mixture of such esters,

(a$_2$) from 0 to 20 % by weight of styrene or of a styrene derivative or of a mixture thereof and

(a$_3$) from 1 to 5 % by weight of acrylic acid or methacrylic acid or of a mixture thereof.

4. A process for printing paper, wherein base paper is coated with a paper coating slip containing a binder as claimed in claim 1, and the paper coated in this manner is printed by the offset printing process.

## Revendications

1. Utilisation pour l'impression offset de papiers qui ont été couchés avec un bain de couche à base d'un liant contenant

A) de 1 à 19 % en poids de polymères insolubles dans l'eau à base d'esters de l'acide acrylique ou de l'acide méthacrylique avec des alcanols en $C_4$-$C_{12}$ ayant une température de transition vitreuse de -60 à 0°C et
B) de 81 à 99 % en poids de polymères insolubles dans l'eau à base de butadiène, les données en poids se rapportent à la somme de A) + B).

2. Utilisation selon la revendication 1, dans laquelle A) est un polymère de

(a1) 50 à 100 % en poids d'un ester de l'acide acrylique ou de l'acide méthacrylique avec des alcanols en $C_4$-$C_{12}$ ou de mélanges de tels esters,
(a2) 0 à 50 % en poids d'un composé vinylaromatique,
(a3) 0 à 15 % en poids d'un autre monomère à insaturation éthylénique.

3. Utilisation selon la revendication 1 ou 2, dans laquelle le composant A est un polymère de

(a1) 80 à 99 % en poids d'un ester de l'acide acrylique ou de l'acide méthacrylique avec des alcanols en $C_4$-$C_{12}$ ou de mélanges de tels esters,
(a2) 0 à 20 % en poids de styrène ou d'un dérivé du styrène ou de leurs mélanges, et
(a3) 1 à 5 % en poids d'acide acrylique ou d'acide méthacrylique ou de leurs mélanges.

4. Procédé d'impression de papier, caractérisé en ce que le papier brut est couché avec un bain de couche contenant un liant selon la revendication 1 et le papier ainsi couché est imprimé par un procédé d'impression offset.